# EUROPEAN PATENT APPLICATION

(11) **EP 4 814 544 A1**
(43) Date of publication of application: **30.09.2026**
(21) Application number: 25165948.8
(22) Date of filing: 25.03.2025
(51) Int. Cl.: G01S 19/21, G01S 19/43, G01S 19/11, G01S 19/27

(54) **METHOD TO DETERMINE A POSITION, VELOCITY AND TIMING SOLUTION OF A SPACECRAFT OR SATELLITE, SATELLITE OR SPACECRAFT AND USE OF A RECEIVER**

(71) Applicant: Spaceopal GmbH, 80335 München (DE)
(72) Inventor: BAUERHIN, André, 82205 Gilching (DE)
(74) Representative: Müller Schupfner & Partner Patent- und Rechtsanwaltspartnerschaft mbB (Muc)

(57) **Abstract**

A method to determine a position of a mobile receiver (10) in a global navigation satellite system (GNSS), comprising
- receiving primary global navigation signals at a receiver (21) of a satellite (20),
- receiving correction and bias data via a first communication channel at the receiver (21) of the satellite (20),
- determining an orbit position of the satellite (20) based on the primary global navigation signals and the correction and bias data by precise point positioning (PPP),
- creating a secondary global navigation signal at the satellite (20) based on the determined orbit position of the satellite (20) and/or including the orbit position of the satellite (20)
- broadcasting the secondary global navigation signal from the satellite (20),
- receiving the secondary global navigation signal at the mobile receiver (10) and determining the position of the mobile receiver (10) based on the secondary global navigation signal,
wherein the primary global navigation signals and/or correction and bias data are authenticated at the receiver (21) of the satellite (20) to check a reliability of the received correction and bias data and/or primary global navigation signal.

## Description

The present invention concerns a method to determine a precise position, velocity and timing solution of a spacecraft or satellite in particular by an embedded mobile receiver, a spacecraft or satellite used in this method and a use of a receiver in such a method.

Global navigation satellite systems (GNSS) are well-known to determine the position of earth-located mobile receivers. The concept of determining the position of the mobile receiver is based on determining the travelled distance of broadcasted navigation signals from four satellites at the mobile receiver. Based on the determined distance which were travelled by the corresponding signal, it is possible to determine the position of the earth located mobile receiver. To determine the travelled distance, the broadcasted signals include information about the time at which the signal is broadcasted, as well as of the actual position of the respective satellite, which broadcasted the received information.

It is a technical problem of the present invention to provide the position of a subject traveling on an orbit with a high accuracy, based on reliable data and, preferably, in a manner such that a tracking is not interrupted and/or achieved/re-established as soon as possible.

The problem is solved by the method according to claim 1, the satellite or spacecraft according to claim 10 and a use of a receiver according to claim 15. Further embodiments of advantage are described in the dependent claims, the figures and the description.

According to a first aspect of the invention a method to determine a position of a spacecraft or satellite, in particular a position, velocity and timing solution of a spacecraft or satellite, is provided, comprising
- receiving primary global navigation signals at a receiver of a satellite or of spacecraft,
- receiving correction and bias data via a first communication channel at the receiver of the satellite or of the spacecraft,
- determining an orbit position of the satellite or of the spacecraft based on the primary global navigation signals and on the correction and bias data by precise point positioning,

wherein a further primary global navigation signal and/or further correction and bias data are provided to the receiver of the satellite or of the spacecraft via a secondary communication channel to provide a second source for data to determine the orbit position of the satellite or of the spacecraft,
wherein the primary global navigation signals and/or correction and bias data are authenticated at the receiver of the satellite or of the spacecraft to check a reliability of the received correction and bias data and/or primary global navigation signal.

Preferably, the method is used to determine a position of an earth located mobile receiver, the method further comprises
- creating a secondary global navigation signal at the satellite based on the determined orbit position of the satellite and/or including the orbit position of the satellite and the precise time reference generated. The secondary global navigation signal propagates navigation data information of one or more satellites in constellation
- broadcasting the secondary global navigation signal from the satellite,
- receiving the secondary global navigation signal at the mobile receiver and determining the position of the mobile receiver based on the secondary global navigation signal,

In a first instance, the orbit position of the satellite or of spacecraft is not based on an estimated value, which is based on the expected path of the satellite or spacecraft along its orbit. Instead, the actual orbit position of the satellite or of the spacecraft is determined by the primary global navigation signals and by using the correction and bias data. In particular, by using the precise point positioning, it is possible to determine the actual and current orbit position of the satellite or spacecraft with high accuracy, i. e. with a position accuracy of a few decimeter or even few centimeters. This accuracy, in turn, can, for example increase also the accuracy in determining the position of the earth-located mobile receiver, since the determination of the position of the mobile receiver strongly depends on the information about the timing and positioning of the satellite, when the secondary global navigation signal is broadcasted. In case of a spacecraft, the position, being provided by PPP can directly be used for navigating the spacecraft. When the term navigation signal is used in this disclosure, the descripted specification applies for both the primary navigation signal and the secondary navigation signal in the following.

In a second instance, in contrast to the prior art, the present invention suggests to authenticate the primary global navigation signal and/or navigation message data. This reduces the probability of a successful cyber-attack, in particular, in form of spoofing, and/or the probability of considering an overlaying primary broadcasted signal from a different source, in particular a different satellite source. Both aspects, i.e. spoofing and /or overlaying signal - create potential errors in determining the actual orbit position, velocity and timing (PVT) solution of the spacecraft or satellite. As a result, it is possible to provide reliable and highly accurate orbit positions for the satellite, which, in turn, can be used to determine the position of the earth-located mobile receiver, if you authenticate the primary global navigation signals and/or correction and bias data. Authentication preferably means that the source of the broadcasted data is identified and matches with information that are correlated to the received primary navigation signal and/or correction and bias data. Preferably, the method is used to determine the position, velocity and timing solution of the spacecraft or satellite.

In a third instance, it is provided that further primary global navigation signals and/or further correction and bias data are provided to the receiver of the satellite or of the spacecraft via secondary communication channels to provide a second source for data to determine a distance, the orbital position and a time reference of the satellite or the spacecraft. As a result, it is possible to rely on the redundant further primary global navigation signals and/or further correction and bias data, especially if the primary global navigation signals might not be useful or compromised e.g. the global navigation signals might not be useful, since they are of low quality and/or fail their authentication. In this case, it is possible to switch between the first communication channel and the second communication channel to continuously provide data which can be used to determine the distance, orbital position and time reference of the satellite or spacecraft. Therefore, this has advantages for providing information for determining the position of the earth located mobile receiver or directly use position information of the spacecraft in an uninterrupted manner.

Preferably, it is provided that the further primary global navigation signals and/or further correction and bias data are used to determine the distance, the orbit position and time reference of the satellite or spacecraft when authentication fails. This might be the case if a spoofing is detected and/or the origin of the primary global navigation signals does not match with the source which is expected. For instance, this might be identified if an encryption hinders the approving of the authentication.

Navigation signal shall be understood as the modulated carrier and ranging codes to perform pseudorange measurements. Each Signal-In-Space data channel transmits different navigation messages types containing information about satellite ephemeris, constellation almanac, health data, corrections and bias data etc. Correction data and bias information are separately handled and divided in Satellite orbit corrections to the broadcast ephemerides, satellite clock corrections to the broadcast ephemerides as well as Satellite Code and Phase bias. In addition, tropospheric and ionospheric corrections are transmitted.

Preferably, the method further comprises
- obtaining via a second communication channel time transfer and ranging data to either augment the PVT solution generated in the receiver with data obtained from the primary global navigation signals of the spacecraft or to generate a PVT solution solely based on the data received via the second communication channel.

In particular, it is provided that the secondary navigation signal may broadcast data with or without authentication and/or integrity information. As a result, there is no authentication necessary at the earth located mobile receiver.

For improving the positioning accuracy without the dependency on a dense reference station network in the vicinity of the mobile receiver unit, the precise point positioning (PPP) method has been developed. In contrast to real time kinematic (RTK) positioning, the PPP approach does not rely on the spatial error correlation of differential measurements, but instead eliminates the individual error components caused by, for example, satellite orbit or clock biases, through precise models in the calculation of the position for the mobile receiver unit. Thus, it is possible to calculate positions accurate to a decimetre or even below with dual-frequency measurements. It is essential for realizing such an accuracy to provide precise correction information, in particular precise orbit and clock correction information. Further, PPP allows a precise determination of the position of the mobile receiver unit even in regions without a dense reference station network. Examples for the PPP method can be found in EP 2 281 210 B1 and EP 10 194 428 A2.

Preferably it is provided that the correction and bias data are free from an ionosphere correction. Preferably, the correction and bias data is provided by a central computer unit at a base station. In particular, the central computer unit receives raw data of several reference stations and calculates the desired correction information. The correction and bias data are for example information, being necessary to be implemented in a PPP method for determining the precise location of the autonomous driving vehicle. For example, it is provided that the computer unit receives the primary data of the mobile receiver unit at a central computation unit, primary data, such as the localizing data, being at least suitable for determining pseudoranges of the receiver unit (i. e. of the navigating vehicle) and being forwarded from the receiver unit to the central computation unit, preferably via a satellite signal, a radio signal or a terrestrial signal. In addition, the central computation unit receives data, such as the correction information, at the central computation unit, the data including at least sub-data for determining correction and bias data and being forwarded from at least one reference station to the central computation unit, preferably via a satellite signal, a radio signal or a terrestrial signal. Then the central computer unit determines at the central computation unit the correction and bias data for the position of receiver of the satellite.

Furthermore, it is preferred that the central computation unit comprises several computers performing a network, such as a cloud. As a cloud or network, the central computer network can be scaled for handling even more complex algorithms for determining correction and bias data and/or handling the data including the incoming primary data and/or secondary data.

The correction and bias data are provided by an external source and are used to correct the global navigation signals, such as the primary global navigation signal or the secondary navigation signal, preferably their pseudoranges, which are influenced by several different circumstances/parameters and would otherwise not provide a sufficient reliability for determining the position.

The receiver at the satellite or the spacecraft preferably comprises at least a microprocessor for executing receiving, handling, computing and/or broadcasting data. Furthermore, it is conceivable that the receiver at the satellite or spacecraft is equipped with antennas and/or interfaces for communicating with further satellites.

Preferably, it is provided that the radio frequency signals are used to communicate in the first communication channel and more preferably optical signals are used to communicate in the second communication channel. It is conceivable that the second communication channel uses radio frequency (RF) signals, preferably of different wavelength. As a result, it is advantageously possible to rely on optical signals, which turn out to be significantly less prone to cyber-attacks, especially jamming and spoofing and provide improved ranging and time transfer performance with respect to radio frequency (RF) links. Alternatively, RF links may be used.

Preferably, it is provided that for authentication, the global position of a source of the correction and bias data is determined. For instance, it is provided that global navigation signals are assigned to the source of the correction and bias data and/or sent together with the correction and bias data. By determining the position of the source of the correction and bias data, and comparing it with stored information of the position of the source, it is possible to authenticate the source, and especially, the primary global navigation signal. This is a successful way to avoid compromised data, for example from spoofed and/or interfering signals, which would otherwise worsen the quality of the created secondary navigation signal.

Preferably, for authentication the method comprises:
- determining the position of a certain base station based on the raw data assigned to the certain reference base station and
- comparing the determined position with a reference value. In other words: the raw data assigned to a certain reference stations are used at the central computation unit for determining the position of the reference station. In the case that the determined position of the reference station does not match the reference value within a pre-defined threshold, authentication fails.

Preferably, it is provided that the satellite travels at a distance from the earth being smaller than 13.000 km, preferably smaller than 9.000 km and most preferably smaller than 8.000 km. Such low- or low medium-earth orbiting satellites are especially of advantage, since they are closer to the earth located user or mobile receiver, have shorter orbital periods hence increased relative velocity compared to the satellites being far away from the earth. As a result, signals are available with higher signal strength to such receivers, which are located on earth in a surface topography having a high aspect ratio, i.e. ratio of the height to the width. Such situations might occur between skyscrapers in cities, or in ravines. Furthermore, the Doppler effect is increased, which simplifies avoiding multi path errors, which otherwise might occur. As a consequence, the use of these satellites is of advantage, especially for determining the position of the earth-located mobile receiver in a way which allows a fast way of establishing or re-establishing a tracking of the earth located mobile receiver.

Preferably, it is provided that the sub-set of ambiguities is set to fix integral values and a second sub-set of ambiguities is set to float value. **It** turned out that it is possible to use, in particular, uncombined and undifferentiated ambiguities and to fix integral values for a first sub-set of ambiguities, which meet a lump-sum criterion, while the second sub-set is set to float values. As a result, a very fast determination of the precise position of the mobile receiver and/or the precise orbit position of the satellite or the spacecraft can be achieved. This accelerates also the tracking of the receiver of the spacecraft or the satellite.

Preferably it is provided that a further satellite broadcast the primary global navigation signal and/or forward the correction and bias data.

Preferably it is provided to an estimated state parameter of the receiver, in particular at the satellite or the spacecraft, for identifying its absolute position, determining the state parameter being based on
- a measured information including a pseudorange, a carrier phase and a Doppler frequency measurement of a visible further satellite,
   - a broadcast information on further satellite orbits and clock offsets, and
   - a high accuracy correction information of further satellite positions, further satellite clock offsets, satellite code and phase biases, the high accuracy correction information being information, which are provided for performing a PPP method
   the method comprising:
   -- determining the further satellite position estimate and the further satellite clock offset estimate for the further satellite based on the broadcast information,
   -- determining a corrected further satellite position and a further corrected satellite clock offset for the further satellite based on the further satellite position estimate and the further satellite clock offset estimate by using the high accuracy information of the further satellite position and the further satellite clock offset,
   -- determining estimated state parameters by a recursive state estimator using at least one of the measured information, the corrected further satellite position, the corrected clock offset estimate and the high accuracy correction information of the code and phase biases ,
   -- determining a set of carrier phase measurements, the set of carrier phase measurements having a lumped sum of residual uncorrected errors, concerning a residual further satellite position, a clock offset error and bias error after application of high accuracy correction information, being below a predefined threshold,
   -- splitting the estimated state parameters into a first subset of fixable state parameters including phase ambiguity estimates of the determined set of carrier phase measurements and a second subset of non-fixable, but adjustable state parameters,
   -- mapping the estimated state parameters, being included in the first sub-set of fixable state parameters, to integer numbers,

   -- adjusting the estimated state parameters, being included in the second subset of non-fixable but adjustable state parameters, in dependency of fixed phase ambiguities, the ambiguity of the carrier phase being assigned to the second subset, wherein the first subset of carrier phase measurement is selected and the carrier phase ambiguity is fixed only for the selected first sub-set, wherein the lump sum represents a requirement for being assigned to the first subset, otherwise the ambiguity of the carrier phase measurement is assigned to the second subset, and
   -- providing the mapped and adjusted estimated state parameters, wherein preferably the recursive state estimator is a Kalman filter with
- a state prediction, which uses the estimated state parameters of a previous epoch and a model describing the dynamics of state parameters to provide predicted state parameters and their covariance matrix, and
- a state update, which corrects a predicted state parameter, using the measured information, and provides updated state parameters and their covariance matrix,
wherein the state parameters are initialized in a first epoch
- by applying the corrected further satellite positions and corrected clock offsets and the high accuracy correction information of the phase and/or code bias to the pseudorange and carrier phase measurements, and
   - by additionally applying model-based corrections for tropospheric and ionospheric delays to the corrected pseudorange and corrected carrier phase measurements, and

- by performing a least-squares estimation of a receiver position and velocity, the receiver clock offset and clock drift and/or and the carrier phase ambiguities using the corrected pseudorange and carrier phase measurements and the Doppler frequency measurements. The further information being used here are assigned to the further satellite, which broadcast the primary navigation signal to the satellite or the spacecraft.

It is preferably provided to select a subset of carrier phase measurements and to fix the carrier phase ambiguity only for the selected subset. As a result, fixing the carrier phase ambiguity is performed not for all state parameters but only for the estimated state parameters of the first subset according to the invention. It turned out that restricting fixing the carrier phase ambiguity only to the first subset of carrier phase measurements is sufficient to provide precise information about the state parameter of the further satellite and therefore of the navigation satellite system, in particular in order to provide a precise absolute position information for the receiver at the satellite. Simultaneously, the computational effort is reduced and as a consequence the convergence time can be reduced, without significantly losing precision of the determined state parameters. Thereby, selecting the first subset is based on ruling out those carrier phase measurements being assigned to those raw data having a comparable high error, for example for the measured information, in particular including high accuracy corrections. In other words: The lump sum represents a requirement for being assigned to the selected subset. Otherwise, the ambiguity of the carrier phase measurement is assigned to the second subset according to the invention. For these estimated state parameters of the second subset, being member of the non-selected subset, a floating value is accepted for the further calculations, in particular the estimated state parameters being assigned to the second subset. The term "subset" preferably means that a number of state parameters being smaller than the number of all state parameters and being bigger than 0. Preferably, splitting divides the state parameter to the selected first subset or the second subset of the estimated state parameters.

Furthermore, the term individual phase ambiguity expresses that no linear combination of ambiguities are considered. For example, the term individual phase ambiguity excludes a wide-lane, ionosphere-free, a narrow-lane and extra-wide-lane ambiguity. Furthermore, BIE-processes are excluded by the specification to the individual phase ambiguity. The individual phase ambiguity is preferably directly connected to a measured parameter and not to a linear combination of parameters, for example measured parameters.

In particular, it is provided that the state parameters include the mapped estimated state parameters of the first subset and the adjusted estimated state parameters of the second subset. Preferably the adjusted parameter of the second subset includes the absolute position of the receiver. The high accuracy correction information is information, which are provided for performing a PPP method, in particular in line with the disclosure of EP 2 281 210 B1 and EP 10 194 428 A2. Such high accuracy correction information is provided via the same satellite, which generates the signal for providing the carrier phase, the pseudorange and/or the Doppler frequency measurement. Alternatively, the high accuracy correction information is provided by broadcasting terrestrially of corresponding transmitter or by downloading them from the internet. Preferably, several state parameters and in particular several state parameters of different visible satellites are determined by the method for determining the state parameter, described above. In particular, "visible" refers to such satellites which transmit information to the receiver.

Furthermore, it is provided that for determining the position of the mobile receiver a multilayer constellation of satellites is used. In such a multilayer constellation secondary navigation signals are used from satellites, being spaced up to 13.000 km, and satellites being spaced in a distance larger than 13.000 km. This further improves interference resilience to provide more accurate position.

Another subject matter of the present invention is a satellite, being used in a global navigation satellite system (GNSS), or a spacecraft to perform the method according to the present invention, comprising
- a receiver to receive primary global navigation signals, correction and bias data and authentication data,
- a control unit being configured
   ∘ to determine the orbit position of the satellite or the spacecraft based on the primary global navigation signals and the correction and bias data by using precise point positioning and.
   ∘ to authenticate the correction and bias data and/or the primary global navigation signals.

All the specifications and advantages being discussed in context to the method, apply analogously to the satellite or spacecraft and vice versa.

Preferably, the satellite or spacecraft comprises an atomic clock. In particular it is provided that the satellite or spacecraft is configured and determined to receive further primary navigation signals and/or further correction and bias data via a second communication channel in addition to the primary navigation signals and/or correction and bias data via the first communication channel. Preferably, for the second communication channel the satellite or spacecraft comprises an optical interface.

Another subject matter is a global navigation satellite system including at least one satellite according to the invention. All the benefits and advantages being discussed in context of the method, apply analogously to the use and vice versa.

Another subject matter of the present invention is a use of a receiver in a satellite or spacecraft to perform a method according to the present invention. All the benefits and advantages being discussed in context of the method, apply analogously to the use and vice versa.

Wherever not already described explicitly, individual embodiments or their individual aspects and features can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

In the drawings:
- **Fig. 1**: schematically illustrates a global navigation satellite system according to an exemplary embodiment of the present invention,
- **Fig. 2**: schematically illustrates a receiver for a global navigation satellite system according to an exemplary embodiment of the present invention,

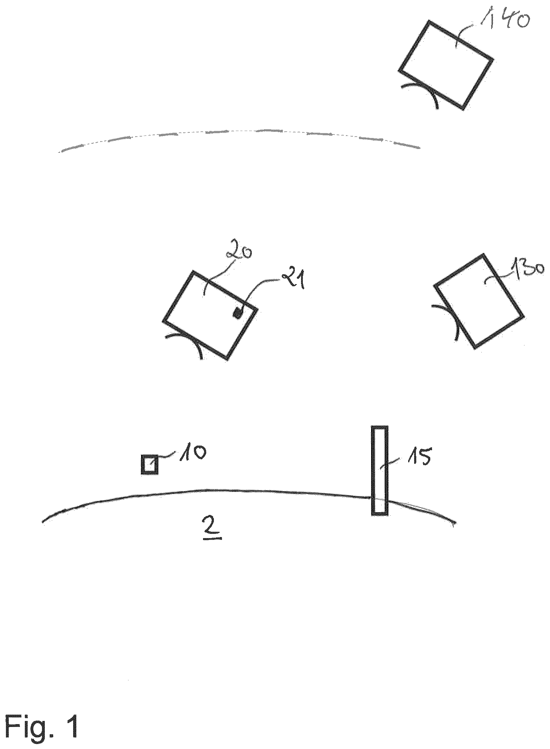

In **Figure 1****,** schematically, a global navigation satellite system (GNSS) is shown. Such a GNSS is used to determine the current position of an earth-located mobile receiver 10. The mobile receiver 10 might be a smartphone, a tablet, a vehicle navigation system or any other system including a receiving means configured and determined to receive and handle global navigation signals. It is well-known to use these global navigation signals to determine the position of the earth-located mobile receiver 10. For this purpose, global navigation signals are received at the receiver 10, the global navigation signals comprising at least pseudoranges or information, which can be used to determine the pseudoranges from at least three or four satellites 20. For determining the position of the earth-located mobile receiver 10, it is essential to know the precise position of the satellite 20 at a given and precise determined point of time, when the navigation signal was broadcasted by the satellite 20. According to the prior art, the position is calculated since an orbit of the satellite 20 is well-defined. To improve the accuracy of determining the position of the earth-located mobile receiver 10, it is suggested to determine the actual position of the satellite 20 at the satellite 20 and broadcast this determined orbit position of the satellite 20 to the earth-located mobile receiver 10 in a secondary navigation signal, instead of just calculating the expected position of the satellite 20.

To determine the actual orbit position of the satellite 20, it is suggested that the satellite 20 receives primary global navigation signals and correction and bias data to determine the orbit position of the satellite 20. As a consequence, it is possible to adapt the actual orbit position, in particular if the satellite 20 experiences an irregularity, which leads to a small deviation from the calculated and expected path at its orbit. This, in turn, again increases accuracy of the determined position of the earth-located mobile receiver 10. In particular, it is provided that the method of precise point positioning (PPP) is used to determine the actual orbit position of the satellite 20. As a consequence, the correction and bias data is prepared and provided to the satellite from an earth-based base station 15, which, in turn, determines the correction and bias data which should be used for the satellite type or even the specific satellite 20. This correction and bias data is sent to the satellite 20 directly or via further satellites 30 or via a further satellite. In particular, it is provided that the correction and bias data information is distributed within the global navigation satellite system by sending the correction and bias data from the earth-based base station 15 to a satellite 30 which, in turn, distributes the correction and bias data via signals from the further satellite 30 to the satellite 20.

It is also conceivable that a plurality of base stations 15, in particular earth-based base stations, are available to communicate correction and bias data via the satellite system based on the corresponding data being available to these base stations. This increases the reliability and availability of the correction and bias data, which can rely on a huge amount of data from further reference stations.

Due to the high density of satellites, further and signals in the orbit, it is of advantage that the broadcasted global navigation signals are respectively assigned to their source to avoid that overlaying broadcasted navigation signals lead to errors in the communication. Furthermore, the system is prone to cyber-attacks, especially spoofing attacks, since the determination of the position strongly depends on the precise and correct information about the respective positions of the satellite, being considered to determine the position. By providing wrong information about the satellite position, the position of the earth-located mobile receiver 10 cannot be correctly presented. Therefore, it is preferably suggested to authenticate the primary global navigation signals and/or the correction and bias data. For instance, the origin of the correction and bias data is checked by determining the global earth position of the source of the correction and bias data and compare it with a certain threshold value. If the determined global earth position of the source, which provides the correction and bias data, exceeds the threshold, authentication fails. Another alternative method to authenticate the broadcasted primary navigation signals, might be an encryption.

Furthermore, it is suggested to provide a second communication channel to provide a further primary navigation signal and/or a further correction and bias data, such that, when authentication fails, the receiver 21 of the satellite 20 can rely on the further primary navigation signals and/or further correction and bias data. This dramatically increases the resilience, by using the redundant further primary navigation signals and/or further correction and bias data. Moreover, it is preferably provided that the signals being used to communicate the primary navigation signals via a first communication channel, are radio frequency (RF) signals.

In contrast to that, the further primary navigation signal and/or further correction and bias data are communicated via a second communication channel using optical signals. It turned out that these optical communication channels are less prone to cyber-attacks such as spoofing, compared to those which uses RF channels, such as the L- band, being used to usually broadcast global navigation satellite signals. As a result, it is possible to provide very precise orbit positions of the satellite, which rely on authenticated data. Further, a probability of an interruption of providing the earth-located position of the mobile receiver is decreased, since the systems can switch between the first and second communication channel, if necessary, e.g. if authentication fails and the alleged source does not match with necessary information or information, which are expected.

Preferably, it is provided that the orbit position is determined for low- or mid-earth orbital satellites, which preferably travels at an orbit being spaced from earth up to 13.000 km, preferably 9.000 km and most preferably up to 8.000 km. Such low- or low medium-earth orbiting satellites are especially of advantage, since they are closer to the earth located user or mobile receiver, have shorter orbital periods hence increased relative velocity compared to the satellites being far away from the earth. As a result, signals are available with higher signal strength, especially in a surface topography having high aspect ratios. High aspect ratio, i.e. the ratio of the height to the width of a recess, might occur, e.g. in nature, in particular. in ravines, or in cities having skyscrapers. In those cases, the secondary global navigation signal is interrupted, since it cannot reach the mobile receiver if the used satellite being is spaced too far. In contrast to that, the comparably fast satellites at a lower orbit can provide the necessary information as soon as possible to calculate the position of the earth located mobile receiver 10. Therefore, a time until a tracking, if possible, is reduced by using satellites at orbits as being specified.

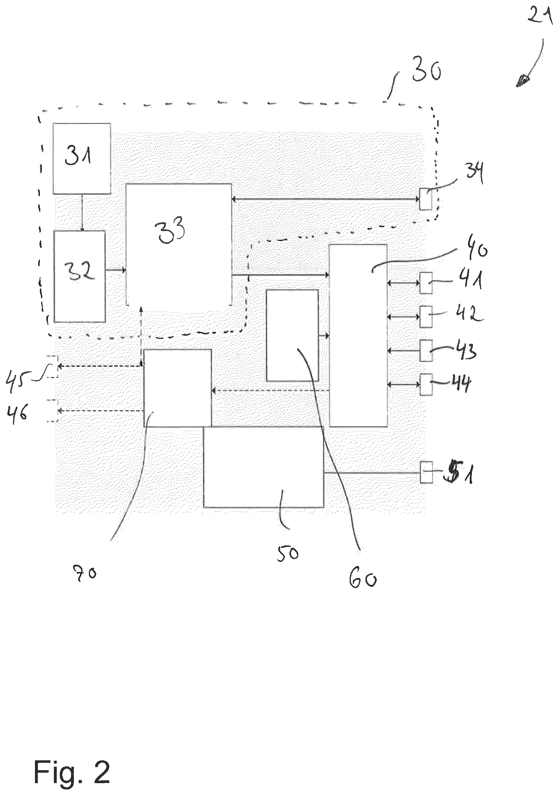

**Figure 2** schematically illustrates a functional system configuration of a receiver 21 at the satellite 20 according to a preferred embodiment of the present invention. Preferably, the receiver 21 comprises a receiver unit 30 to receiver to and to handle global navigation signal. The receiver unit 30 comprises for example an antenna 31, a low noise amplifier 32 and a center unit 33 such as exemplarily a Septentrio asteRx-m3 Pro or a Novatel EOM 719. The center unit 33 might provide information to a receiver interface 34. Furthermore, the receiver 21 comprises control unit 40, a power supply 50 having an input 51, data interfaces41, 42, 43, 44 and a non-volatile memory 60. Each individual component is guarded by separate latch-up protections to ensure robustness against single-event effects (SEE) due to radiation. The receiver 21 further provides at least two RS422 interfaces 41, 42, one for telemetry and telecommand (TM/TC) and another one for cross-link interface for an onboard redundant system configuration or used to obtain ranging and time-transfer information from an optical payload. Furthermore, there is an optical time transfer interface 43 and a NAV generator 44 or interface, being both in communication with the control unit 40. Further the receiver comprises an atomic clock, in particular a chip scale atomic clock 70. The dashed lines represent optional components and interfaces that are only required if a time synchronized 10 MHz output signal shall be output to other subsystems (e.g. for the navigation signal generation in a PNT satellite). The control unit 40, preferably relies on primary navigation signals including for example dual frequency pseudo range and carrier phase measurements, decoded primary navigation signals from the center unit 33 of the receiver unit 30 and corrections (Clock, orbit, code and phase biases) from the base station 15. To determine the orbit position of the satellite 20 preferably ionosphere-free combinations of two signals are used to remove the first-order ionospheric effect. I particular the control unit 40 is configured and determined to execute an extended Kalman filter that implements a reduced dynamic orbit determination with ambiguities of the carrier phase measurements estimated as float values. Between two successive updates of the GNSS measurements, at 1Hz, the position and velocity are propagated by modelling the forces acting on the satellite with a dynamic model and numerically integrating the resulting accelerations over time.

In particular the receiver of figure 2 can be used in a satellite, such as described in figure 1, or in a spacecraft (not shown). The high precise information about the position, being provided by PPP, can directly be used for navigating in the spacecraft. The same benefits and specifications, such as authentication and second communication channel, applies for the spacecraft with respect to determining the orbit position without generating the secondary navigation signal.

### Reference numerals:

- 10: mobile receiver
- 15: base station
- 20: satellite
- 21: receiver
- 30: receiver unit
- 31: antenna
- 32: low noise amplifier
- 33: center unit
- 34: receiver interface
- 40: control unit
- 41 - 46: interfaces
- 50: power supply
- 51: power input
- 60: memory
- 70: atomic clock
- 130,140: further satellite

## Claims

1. A method to determine a position of a spacecraft or satellite (20), in particular a position, velocity and timing solution of a spacecraft or satellite (20), the method comprising
- receiving primary global navigation signals at a receiver (21) of the satellite (20) or the spacecraft,
- receiving correction and bias data via a first communication channel at the receiver (21) of the satellite (20) or the spacecraft,
- determining an orbit position of the satellite (20) or spacecraft based on the primary global navigation signals and on the correction and bias data by precise point positioning (PPP),
wherein a further primary global navigation signals and/or further correction and bias data are provided to the receiver of the satellite (20) or of the spacecraft via a secondary communication channel to provide a second source for data to determine the orbit position of the satellite (20) or of the spacecraft, in particular a distance, the orbit position and a time reference,
wherein the primary global navigation signals and/or correction and bias data are authenticated at the receiver (21) of the satellite (20) or of the spacecraft to check a reliability of the received correction and bias data and/or primary global navigation signal.

2. The method according to claim 1, wherein the further primary global navigation signal and/or the further correction and bias data are used to determine the orbit position of the satellite (20) or spacecraft, when authentication failed.

3. The method according to one of the preceding claims, wherein radio frequency (RF)-signals are used to communicate in the first communication channel, and preferably optical signals are used to communicate in the second communication channel.

4. The method according to one of the preceding claims, further comprising
- creating a secondary global navigation signal at the satellite (20) based on the determined orbit position of the satellite (20) and/or including the orbit position of the satellite (20)
- broadcasting the secondary global navigation signal from the satellite (20), and
- receiving the secondary global navigation signal at the mobile receiver (10) and determining the position of the mobile receiver (10) based on the secondary global navigation signal.

5. The method according to one of the preceding claims, wherein for authentication the global position of a source of the correction and bias data is determined.

6. The method according to claim 1, wherein the satellite (20) travels at a distance from earth (2) being smaller than 13.000 km, preferably smaller than 9.000 km and most preferably 8.000 km.

7. The method according to one of the preceding claims, wherein a first sub-set of ambiguities is set to fixed integer values and a second subset of ambiguities is set to float values.

8. The method according to one of the preceding claims, wherein a further satellite (130) broadcast the primary global navigation signal and/or forward the correction and bias data.

9. The method according to one of the claims, wherein for determining the position of the mobile receiver a multilayer constellation of satellites (130, 140) is used.

10. A satellite (20), being used in a global navigation satellite system (GNSS), or a spacecraft to perform the method according to one of the proceeding claims, comprising:
- a receiver (21, 40) to receive primary global navigation signals, correction and bias data and authentication data
- a control unit (40) being configured and determined
-- to determine the orbit position of the satellite (20) or the spacecraft based on the primary global navigation signals and the correction and bias data by using precise point positioning and
-- to authenticate the correction and bias data and/or the primary global navigation signals.

11. The satellite (20) or spacecraft according to claim 10, wherein the satellite (20) or spacecraft comprises an atomic clock.

12. The satellite (20) or spacecraft according to claim 10 or 11, wherein the satellite (20) or spacecraft is configured and determined to receive further primary navigation signals and/or further correction and bias data via a second communication channel in addition to the primary navigation signals and/or correction and bias data via the first communication channel.

13. The satellite (20) or spacecraft according to one of the claims 10 to 12, wherein for the second communication channel the satellite comprises an optical interface.

14. A global navigation satellite system (GNSS) comprising a satellite (20) according to one of the claims 10 to 13

15. A use of a receiver (21) in a satellite (20) or a spacecraft to perform a method according to one of the claims 1 to 9.
